# EUROPEAN PATENT APPLICATION

(11) **EP 4 621 019 A1**
(43) Date of publication of application: **24.09.2025**
(21) Application number: 25164630.3
(22) Date of filing: 19.03.2025
(51) Int. Cl.: C09D 7/20, C08L 53/02, C09D 153/02, C08J 3/09, C08K 5/01

(54) **POLYMER COMPOSITIONS AND METHODS OF PREPARATION THEREOF**

(30) Priority: 19.03.2024 US 202463566977 P
(71) Applicant: Kraton Polymers Nederland B.V., 1322 CE Almere (NL)
(72) Inventor: KRUTZER, Bert, Houston, 77084 (US)
(74) Representative: Henkel & Partner mbB

(57) **Abstract**

The disclosure relates to a solvent-based polymer composition comprising, consisting essentially of, or consisting of: (i) a base polymer selected from the group consisting of: polyurethane (TPU), acrylic polymers, epoxy resins, polyamides, polyesters, polyethylene, polypropylene, rubbery polymer, polyisobutylene, poly(vinyl acetate), poly(vinyl alcohol), and mixtures thereof, (ii) a decarboxylated rosin as a solvent in a solvent system containing a hydrocarbon-based solvent selected from any of: aromatic / aliphatic hydrocarbons, esters, alcohols, ketones, and mixtures thereof, (iv) a tackifier, and (v) at least an additive. The composition can be used in applications including adhesive, sprayable adhesive, sealant, and coating.

## Description

### FIELD

The present disclosure relates to a composition comprising a base polymer in a solvent system with a bio-based material as a co-solvent, methods of preparation, and applications thereof.

### BACKGROUND

It is well-known that polymers have different solubility characteristics. It is also known that many polymeric materials may be dissolved in or dispersed on the molecular level to form a gel, with an appropriate solvent system. It is desirable to have a mutual compatibility between the polymeric material and the solvent system for dissolution.

The emphasis has been placed on finding solvents that will dissolve polymers at room temperature and atmospheric pressure. Dissolution or gel formation is typically accomplished by contacting the polymer and the solvent at ambient to relatively elevated temperatures. It is known that an increase in temperature will speed up the dissolution of the polymer, as there is an increase in surface area by comminution of the polymer into relatively small particles. However, the handling of solvents at high temperatures is often not desirable in the context of industrial health, safety, and environment (HSE).

Solvent-based compositions are used to adhere one polymer article to another polymer article, or to bond polymer articles to other substrates. These compositions generally work by providing a polymer composition in solution. A problem often encountered when bonding polymer articles together or to other substrates is the incompatibility of the materials, due to low solubility, particularly at room temperature.

There is a still need for improved compositions in a solvent system containing a co-solvent having excellent compatibility with the polymer, an effective solubilizing capability, low volatile organic compounds (VOCs), low odor, and better performance.

### SUMMARY

In one aspect, a polymer composition comprises, consists, or consists essentially of, a base polymer fully dissolved in a solvent system containing a mixture of a decarboxylated rosin (DCR) as a first solvent and a co-solvent selected from aromatic / aliphatic hydrocarbons, esters, alcohols, ketones, and mixtures thereof, at a DCR to co-solvent weight ratio of 20:80 to 80:20. The DCR has one or more C=C groups and 40 to 100 wt.% of tricyclic compounds having 18 to 20 carbon atoms, wherein a sum of the tricyclic compounds as aromatic and cycloaliphatic in the DCR is > 50 wt.%, based on total weight of the DCR and an amount of tricyclic cycloaliphatic compound in the DCR is > 15 wt.%, based on total weight of the DCR. The base polymer is selected from the group consisting of: acrylic polymers, epoxy resins, polyamide, polyesters, polypropylene, styrenic block copolymer (SBC), polybutadiene, styrene-butadiene rubber, polyisobutylene, poly(vinyl acetate), and mixtures thereof. In embodiments, the polymer composition is characterized as having a transparency of >95% transmittance at 600 nm measured in accordance with ASTM-D1003.

In a second aspect, the solvent system has a Hildebrand solubility of at least 1.0 (cal/cm³)^{1/2}) more than or at least 1.0 (cal/cm³)^{1/2}) less than the Hildebrand solubility of the base polymer.

### DESCRIPTION

The following terms will be used throughout the specification.

"At least one of [a group such as A, B, and C]" or "any of [a group such as A, B, and C]" means a single member from the group, more than one member from the group, or a combination of members from the group. For example, at least one of A, B, and C includes, e.g., A only, B only, or C only, as well as A and B, A, and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C".

"Selected from X₁, X₂, X₃,..., Xₙ, and mixtures thereof" means a single member of the group or more than a member of the group, e.g., X₁, X₂, X₃, ... Xₙ, or some, or all members of the group X₁₋Xₙ being present.

"Block" as used herein refers to a section of a polymer molecule that comprises a plurality of identical constitutional units (monomers) and possesses at least one constitutional or configurative feature that does not appear in the immediately adjacent sections (blocks).

"Copolymer" refers to a polymer derived from more than one species of monomer.

"Block copolymer" refers to a copolymer that comprises more than one species of monomer, wherein the monomers are present in blocks. Each block is constituted of a set of monomer units different from the set of monomers of the connected surrounding blocks in the same block copolymer. Each block can be constituted of a homopolymer or a random copolymer.

"Molecular weight" or M_{w} refers to the polystyrene equivalent molecular weight in kg/mol of a polymer block or a block copolymer. M_{w} can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. M_{w} of polymers measured using GPC are polystyrene equivalent molecular weights or apparent molecular weights, measured at the peak of the GPC trace, and commonly referred to as polystyrene equivalent "peak molecular weights," designated as Mₚ. Individual GPC block M_{w} can be calculated by the difference of Mₚ measured before and after the considered block polymerization. For example, M_{w} of block B is the Mₚ of species A-B minus the Mₚ of block A.

"Coating" refers to a covering that is applied to a substrate, a surface of an object, or the object itself.

"Epoxide Equivalent Weight" (EEW) refers to the epoxide content, commonly expressed as the equivalent weight, which is the weight of resin containing 1 mole equivalent of epoxide (g/mol.).

"Bio-based" refers to products wholly or partly derived from biomass, e.g., plants, trees, vegetables, animals, etc.

"Hydrocarbon" refers to organic compounds or radicals consisting exclusively of the elements carbon and hydrogen. These moieties include alkyl, alkenyl, alkynyl, and aryl moieties. These moieties also include alkyl, alkenyl, alkynyl, and aryl moieties substituted with other aliphatic or cyclic hydrocarbon groups, such as alkaryl, alkenaryl and alkynaryl. They can be straight, branched, or cyclic.

"Compatible" refers to the ability of the solvent-based composition to form a solution or dispersion that does not form inseparable phases at operating conditions. For instance, at room temperature, the components may separate but upon heating mildly to approximately 35-85° C and mild stirring, the components form a homogeneous /soluble solution or a stable dispersion.

"Dissolved" refers the dissolution of a base polymer in a solvent.

"Partial solubility" refers to situations when a base polymer does not fully dissolve, but some portion dissolves, while the rest remains undissolved (as visible particles, gels, or turbidity). A polymer is considered partially soluble when 10-90 wt.% of the base polymer dissolves in the solvent.

"Full solubility" refers to a polymer's ability to fully dissolve in a solvent, forming a homogeneous solution with > 90 wt.%, or 95 wt.%, or 98 wt.%, or 99 wt.% of the base polymer dissolved in the solvent.

"Temperature-dependent dissolution" refers to a process where at room temperature, the polymer components may separate but upon heating mildly to approximately 35-85° C or more, the polymer components form a homogeneous solution.

"Solubility Parameter" or (δ) of a solvent or polymer," refers to the square root of the vaporization energy (ΔE) divided by its molar volume (V), as in the equation δ = (ΔE/V)^{1/2}. The more similar the solubility parameters of two substances, the higher will be the solubility between them and hence the expression "like dissolves like." Hansen established that the solubility parameter of a solvent or polymer is the result of the contribution of three types of interactions: dispersion forces (δ_{D}²), polar interactions (δ_{P}²) and hydrogen bonds (δ_{H}²) (Hansen, 2007; Hansen, 1967), with the total solubility (Hildebrand) parameter δT defined as: δ_{T} = (δ²_{D} + δ²_{P} + δ²_{H} )^{½}. The Hildebrand solubility parameter is expressed as (cal/cm³)^{1/2}.

The disclosure relates to a solvent-based polymer composition comprising, consisting essentially of, or consisting of: (i) a base polymer selected from the group consisting of: polyurethane (TPU), acrylic polymers, epoxy resins, polyamides, polyesters, polyethylene, polypropylene, rubbery polymer, polyisobutylene, poly(vinyl acetate), poly(vinyl alcohol), and mixtures thereof, (ii) a decarboxylated rosin as a first solvent in a solvent system containing a hydrocarbon-based solvent selected from any of: aromatic / aliphatic hydrocarbons, esters, alcohols, ketones, and mixtures thereof, (iv) a tackifier, and (v) at least an additive. The composition can be used in applications including adhesive, sprayable adhesive, sealant, and coating.

(Base Polymer): The base polymer can be any of: polyurethane (TPU), acrylic polymers such as styrene acrylonitrile (SAN), acrylonitrile butadiene styrene (ABS), epoxy resins, polyamides, polyesters, styrenic block copolymers (SBCs), polyethylene, polypropylene, rubbery polymer, polyisobutylene, poly(vinyl acetate), poly(vinyl alcohol), and mixtures thereof.

**In** embodiments, the base polymer is present in an amount of > 5 wt. %, or < 95 wt. %, or 5- 87 wt. %, or 7- 80 wt. %, or 12-70 wt. %, or 15-60 wt.%, or 25-55 wt.% based on the total weight of the polymer composition.

Polyurethane as a Base Polymer: Polyurethane is a reaction product of an isocyanate and at least one additional component selected from the group consisting of a polyol, a chain extender having two hydroxyl groups, and a diamine. The isocyanate is an aliphatic diisocyanate selected from the group consisting of diisophorone diisocyanate, 1,4-cyclohexyl diisocyanate, dicyclohexylmethane-4,4'-diisocyanate, and any mixtures thereof. Polyol is a hydroxyl-terminated polyalkylether selected from the group consisting of polyethylene glycol, polypropylene glycol, polytetramethylene glycol, and any mixtures thereof. The chain extender having two hydroxyl groups is selected from the group consisting of ethylene glygol, propylene glycol, butanediol, hexanediol, 1,4-cyclohexanediol, 2,2,4,4-tetramethyl-1,3-cyclobutanediol, and any mixtures thereof. The solvent is selected from the group consisting of methylene chloride, dichloroethane, dioxolane, N-methylpyrrolidone, tetrahydrofuran, dioxane, dimethylformamide, m-cresol, chloroform, cyclohexanone, pyridine, dimethylsulfoxide, and any mixtures thereof.

Acrylic Polymer as a Base Polymer: Examples of acrylic polymer include polyacrylates, polymethacrylates, and mixtures thereof. In embodiments, the acrylic polymer comprises a blend of high Tg (> 25°C) monomer and low Tg (< 25 °C) monomer, with the high Tg monomer comprising 20 - 80 wt. %, or 25 - 75 wt. %, or 30 - 70 wt. % of the acrylic blend; and the remainder the low Tg monomer.

The high Tg monomer can be, any acrylic or methacrylic acid ester which, when polymerized, gives a homopolymer having a Tg value > 25°C, or > 40°C, or > 50°C. Examples of suitable esters include isobornyl acrylate, isobornyl methacrylate, methyl methacrylate, ethyl methacrylate, isopropyl methacrylate, isobutyl methacrylate, tert-butyl methacrylate, tert-butyl acrylate, n-propyl methacrylate, isobutyl methacrylate, and cyclohexyl methacrylate.

The low Tg monomer can be any acrylic or methacrylic acid ester which, when polymerized, gives a homopolymer having a Tg value of < 25°C, or < 0°C. Examples of suitable esters include methyl acrylate, ethyl acrylate, n-propyl acrylate, isopropyl acrylate, n-butyl methacrylate, n-butyl acrylate, isobutyl acrylate, 1-hexyl acrylate, 2-ethylhexyl acrylate, heptyl acrylate, n-octyl acrylate, 2-octyl acrylate, dodecyl methacrylate, dodecyl acrylate, tridecyl methacrylate, methacrylic ester and mixtures thereof.

Epoxy Resin as a Base Polymer: Epoxy resin is in the form of a modified and unmodified liquid or a solid compound or blends thereof. The epoxy resins can be any of high or low average molecular weight (MW_{w}) resins, or blends.

In embodiments, the epoxy resin is a high MW_{w} (typically referred to as solid) epoxy resin, having an epoxide equivalent weight (EEW) of 1000 to 10000 g/eq, or 1500-8000 g/eq, or 2000- 6000 g/eq, and a MW_{w} of 3000 to 40000 g/mol, or 6000-30000 g/mol, or 9000-20000 g/mol.

In embodiments, the epoxy resin is a low MW_{w} (typically referred to liquid) epoxy resin having an EEW of < 1000 g/eq, or < 300 g/eq, or 100 to 250 g/eq, or 120 to 200 g/eq, or 150 to 200 g/eq, and a MW_{w} of 200 to 600 g/mol, or 240 to 400 g/mol, or 300 to 400 g/mol.

In embodiments, the epoxy resin is a semi-solid resin or liquid, with EEWs intermediate between the liquid and solid resin.

In embodiments, the epoxy resin is selected from saturated or unsaturated aromatic, aliphatic, cycloaliphatic compounds, or mixtures thereof. In embodiments, the epoxy resin is selected from the group consisting of bisphenol A epoxy resin, bisphenol F epoxy resin, bisphenol S epoxy resin, an alicyclic epoxy resin, an aliphatic linear epoxy resin, a diglycidyl ether of a dihydric phenol, a diglycidyl ether of dihydric alcohol and combinations thereof. These resins contain one or more repeating units derived from bisphenol A and/or F. In embodiments, the ethers, or repeating units, are obtained by polymerizing glycidyl ethers of bisphenol A and/or F with epichlorohydrin.

Non-limiting examples of epoxy resin compounds include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphthylmethane, and the 2,2', 2,3', 2,4', 3,3', 3,4', and 4,4' isomers of dihydroxydiphenylmethane, dihydroxydiphenyldimethylmethane, dihydroxydiphenylethylme thylmethane, dihydroxydiphenylmethylpropylmethane, dihydroxydiphenylethylphenyl-methane, dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

In embodiments, the epoxy resin is a water-based or waterborne epoxy resin, e.g., polyester-based or acryl-based or silanol-functional silicone resins comprising the units (R₃SiO_{1/2})a; (R₂SiO_{2/2})b; (RSiO_{3/2})c and (SiO_{4/2})d, wherein "R" is independently an alkyl, aryl group, or silanol-functional hydrocarbon group; and wherein the value of a+b+c+d=1.

In embodiments, the epoxy resins are modified with mono-functional or bifunctional reactive diluent, or cresyl ether, or non-phthalate, or non-reactive modifiers.

In embodiments, the epoxy resin component has an EEW of 160 - 335 g/mol., or 170 - 300 g/mol., or 180 - 250 g/mol., or 190 - 210 g/mol.

Polyester as a Base Polymer: Polyester resin can be formed by reacting compounds having reactive functional groups e.g., compounds having alcohol, acid, anhydride, acyl or ester functional groups. Alcohol functional groups are known to react, under proper conditions, with acid, anhydride, acyl or ester functional groups to form a polyester linkage.

Polypropylene (PP) as a Base Polymer: PP can be any of polypropylene or a polypropylene homopolymer. Polypropylene homopolymers suitable for the composition include any type of polypropylene e.g., the polypropylene homopolymer may be atactic polypropylene, isotactic polypropylene, hemi-isotactic, syndiotactic polypropylene, or combinations thereof. A polymer is "atactic" when its pendant groups are arranged in a random fashion on both sides of the chain of the polymer. In contrast, a polymer is "isotactic" when all its pendant groups are arranged on the same side of the chain and "syndiotactic" when its pendant groups alternate on opposite sides of the chain. In hemi-isotactic polymer, every other repeat unit has a random substituent.

In embodiments, the polypropylene has a density of 0.86 g/cm³, or < 0.87 g/cm³, or < 0.88 g/cm³, or < 0.89 g/cm³, < 0.90 g/cm³ or < 1 g/cm³ according to ISO 1183 and a softening point of 10 -120 ⁰C, or < 120 °C, or < 110 ⁰C, or < 100 ⁰C, or < 90 ⁰C, or <80 ⁰C, or < 70 ⁰C as per ASTM D3104.

In embodiments, the polypropylene has a melt flow rate (MFR) of 3-60, or < 60, or < 55, or < 45, or < 35, or < 25, or >2, or > 5 g/10 min at 230 ° C and 2.16 kg load according to ASTM D1238.

Rubbery Polymer as a Base Polymer: In embodiments, the base polymer is a rubbery polymer selected from but not-limited to natural rubber (NR), butyl rubber, halogenated butyl rubber, and EPDM (ethylene propylene diene monomer rubber), styrene-butadiene rubber (SBR), butadiene rubber, synthetic polyisoprene rubber, epoxylated natural rubber, polybutadiene rubber, high-cis polybutadiene rubber, butyl rubber, ethylene propylene diene monomer rubber, ethylene propylene rubber, maleic acid-modified ethylene propylene rubber, isobutylene-aromatic vinyl or diene monomer copolymers, brominated-NR, chlorinated-NR, brominated isobutylene p-methylstyrene copolymer, chloroprene rubber, epichlorohydrin homopolymers rubber, epichlorohydrin-ethylene oxide or allyl glycidyl ether copolymer rubbers, epichlorohydrin-ethylene oxide-allyl glycidyl ether terpolymer rubbers, chlorosulfonated polyethylene, chlorinated polyethylene, maleic acid-modified chlorinated polyethylene, methylvinyl silicone rubber, dimethyl silicone rubber, methylphenylvinyl silicone rubber, polysulfide rubber, vinylidene fluoride rubbers, tetrafluoroethylene-propylene rubbers, fluorinated silicone rubbers, fluorinated phosphagen rubbers, styrene elastomers, thermoplastic olefin elastomers, polyester elastomers, urethane elastomers, polyamide elastomers, and mixtures thereof.

(Styrenic Block Polymer as a Base Polymer): The styrenic block copolymer (SBC) component in the polymer composition can be any unhydrogenated, hydrogenated, partially hydrogenated, selectively hydrogenated SBC and mixtures thereof.

In embodiments, the SBC is any of a linear or branched (multi-armed) block copolymer, comprising at least one polymer block A derived from a vinyl aromatic monomer, and at least one polymer block B derived from a conjugated diene monomer. The vinyl aromatic monomer can be introduced or copolymerized into the conjugated diene blocks in any order and in any distribution.

In embodiments, the styrenic block copolymer is a hydrogenated styrenic block copolymer having a general configuration selected from: S-EB-S, S-E/P, S-E/B, S-EP-S, and mixtures thereof. Each S block is derived from a vinyl aromatic monomer, each EB block is an ethylene-butylene block, and each EP block is an ethylene-propylene block.

Other Polymers as a Base Polymer: In embodiments, the base polymer is further selected from polyamides, polyethylene, polyisobutylene, poly(vinyl acetate), poly(vinyl alcohol), cellulose acetate, polysulfone, and mixtures thereof.

(Solvent System or Solvent Blend): The base polymer is dissolved or dispersed in a solvent system. The solvent system comprises a sufficient amount of DCR for the solvent system to have Hildebrand solubility parameters compatible with the solubility parameter of the SBC (i.e., ±1.0 (cal/cm³)^{1/2} of the SBC's value), ranging from about 7.5 to about 10, or from about 7.9 to about 9.0, or from about 8.1 to about 8.8 (calories/cm³)^{1/2}.

The solvent system contains a mixture of decarboxylated rosin ("DCR") as a first solvent with another solvent (co-solvent or second solvent), with the co-solvent being selected from the group bio-based or plant-based solvent, terpenes, hydrocarbon-based solvent such as aromatic / aliphatic hydrocarbons, esters, alcohols, ketones, and mixtures thereof.

In embodiments, the weight ratio of DCR to co-solvent in the solvent blend ranges from 5:95 to 95:5, or 10:90 to 90:10, or 15:85 to 85:15, or 20:80 to 80:20, or 25:75 to 75:25, or 30:70 to 70:30, or 35:65 to 65:35, or 40:60 to 60:40, or 45:55 to 55:45, or 50:50. In embodiments, the amount of DCR in the polymer composition is in the range of > 10 wt. %, or < 55 wt. %, or 10-55 wt. %, or 15- 50 wt. %, or 20-45 wt. %; and the amount of the co-solvent in the polymer composition is in the range of > 5 wt. %, or < 80 wt. %, or 5- 80 wt. %, or 10-75 wt. %, or 15-70 wt. %, or 20-65 wt. %, or 25-60 wt. %, or 30-55 wt. %, 35-50 wt. %.

In embodiments depending on the base polymer and the solvent system, a sufficient amount of the solvent system is present for a (weight) ratio of solvent system to the base polymer of 98:2 wt. %, or 95:5 wt. %, or 90:10 wt. %, or 88:12 wt. %, or 85:15 wt. %, or 80:20 wt. %, or >75 wt. %, or <98 wt. %.

(Decarboxylated Rosin DCR): DCR is obtained by decarboxylating a rosin acid, or by dimerizing and decarboxylating a rosin acid and separating / removing the dimerized species. DCR is in the form of a liquid and can be any of a crude DCR, a distilled or purified DCR, or mixtures thereof. DCR can be hydrogenated and / or functionalized. Hydrogenation of DCR results in hDCR (hydrogenated DCR) having a reduction of nonaromatic unsaturation or C=C double bonds to obtain hydrogenated components. Crude DCR is DCR containing 5-25 wt.% of higher molecular weight (450-1500 Da) components, e.g., hydrocarbons, oligomers, polymers, impurities, or dimer / trimer of fatty acids. Distilled or purified DCR refers to crude DCR having heavy fractions removed to improve color, reduce sulfur, etc.

In embodiments, DCR comprises one or more C=C groups, 40 - 100 wt.% of tricyclic compounds having 18 - 20 carbon atoms, 0 - 30 wt.% of components with < 19 carbon atoms, and 40 - 100 wt.% of components with a molecular formula in the range from C₁₉H₂₀ to C₁₉H₃₄, based on the total weight of the DCR.

In embodiments, DCR is characterized as having a m/z (mass/charge) value in the range of 220 - 280, or 230 - 270, or 234 - 262, or 235 - 265, or > 230, or < 265, measured by GC-FID-MS.

In embodiments, DCR is characterized as having an oxygen content of < 5%, or < 3%, or < 2%, or 0 - 1%. The oxygen content (in %) can be calculated as oxygen to carbon ratio, or the sum of oxygen atoms present divided by sum of carbon atoms present, with the number of oxygen and carbon atoms being obtained from elemental analyses.

In embodiments, DCR is characterized as having a sum of tricyclic compounds as aromatic and cycloaliphatic of > 50 wt.%, or > 55 wt.%, or > 60 wt.%, or > 74 wt.%, or > 90 wt. %, or up to 100 wt.%, or 50-100 wt.%, or 55-100 wt.%, or 60-100 wt.%, or 74-100 wt.%, or 50-95 wt.%, of total weight of the DCR. Aromatic DCR is defined as DCR species having a MW of 252-256, with MW of 254 as having a reactive double bond, and cycloaliphatic DCR is defined as DCR species having a MW of 260 or 262.

In embodiments, the DCR has a C19 (MW 248-262) content of > 50 wt.%, or > 60 wt.%, or > 70 wt.%, or > 80 wt.%. In embodiments, the amount of cycloaliphatic DCR (MW 260 and 262) is > 15 wt.%, or > 20 wt.%, or > 30 wt.%, or > 40 wt. %, or > 50 wt.%, or > 80 wt. %, or 15-90 wt.%, or 15-85 wt.%, or 25-80 wt.%, or 40-80 wt.%, based on the total weight of the DCR.

In embodiments, the total amount of tricyclic compounds having reactive double bond (C=C group) is 1-45 wt.%, or < 40 wt.%, or < 30 wt. %, or <20 wt.%, or < 15 wt.%, or < 10 wt. % of total weight of the DCR. Reactive C=C group is defined as DCR species having a MW of 254 or 258.

In embodiments, the DCR has C19 species with MWs of 254, 250, and 248 in an amount of < 5 wt.%, or < 3 wt.%, or < 1 wt.%, or < 0.5 wt.%, or 0 wt.%.

In embodiments, the DCR has a C13 species with MWs of 174 and 180 in an amount of 5-20 wt.%, or 5-15 wt.%, or > 5 wt.% or < 20 wt.%.

In embodiments before hydrogenation, the unhydrogenated DCR contains C19 species with a MW of 262 in an amount of 5-20 wt.%, or 5-15 wt.%, or < 25 wt.%, or < 20 wt.%, or < 15 wt.%. After hydrogenation, the hDCR contains C19 species with a MW of 262 in an amount of 25-100 wt.%, or 25-90 wt.%, or 25-80 wt.%, or 40-75 wt.%, or 50-70 wt.%, or > 25 wt.%, or > 35 wt.%, or > 50 wt.%, or > 75 wt.%.

In embodiments before hydrogenation, the unhydrogenated DCR contains C19 species with a MW of 260 in an amount of 5-25 wt.%, or 10-20 wt.%, or > 5 wt.%, or > 10 wt.%, or > 15 wt.%, or < 20 wt.%. After hydrogenation, the hDCR contains C19 species with a MW of 260 in an amount of 0-5 wt.%, or 0-3 wt.%, or 0-1 wt.%, or < 5 wt.%, or < 2 wt.%, or 0 wt.%.

In embodiments before hydrogenation, the unhydrogenated DCR contains C19 species with a MW of 256 in an amount of 35-55 wt.%, or 40-50 wt.%, or > 37 wt.%, or > 40 wt.%, or > 45 wt.%. After hydrogenation the hDCR contains C19 species with a MW of 256 in an amount of 0-40 wt.%, or 5-35 wt.%, or 10-30 wt.%, or < 40 wt.%, or < 30 wt.%.

In embodiments before hydrogenation, the unhydrogenated DCR contains C19 species with a MW of 252 in an amount of 5 - 20 wt.%, or 5-15 wt.%, > 5 wt.%, or > 10 wt.%. After hydrogenation, the hDCR contains C19 species with a MW of 252 in an amount of 0-5 wt.%, or 0-3 wt.%, or < 5 wt.%, or < 3 wt.%, or < 1 wt.%, or 0 wt.%. In embodiments before hydrogenation, the unhydrogenated DCR contains C13 species with a MW of 180 in an amount of 0-5 wt.%, or 0-3 wt.%, or < 5 wt.%, or < 2 wt.%, or < 1 wt.%, or 0 wt.%. After hydrogenation, the hDCR contains C13 species with a MW of 180 in an amount of 0-25 wt.%, or 5-20 wt.%, or 5-15 wt.%, or > 5 wt.%, or > 7 wt.%, or > 10 wt.%.

In embodiments before hydrogenation, the unhydrogenated DCR contains C13 species with a MW of 174 in an amount of 5-25 wt.%, 5-20 wt.%, or 5-15 wt.%, or > 5 wt.%, or > 10 wt.%, or < 20 wt.%. After hydrogenation, the hDCR contains C13 species with a MW of 174 in an amount of 0-5 wt.%, or 0-3 wt.%, or < 5 wt.%, of < 2 wt.%, or 0 wt.%.

The MW of the species in unhydrogenated DCR and hDCR as measured using the analytical methods previously specified (e.g., MS, MS /GC / HPLC, and GC-MS) can be identified by the following retention profile: MW of 174 g/mol, 7.0 - 8.5 minutes; MW of 180 g/mol, 2.5 - 4.0 minutes; MW of 248 g/mol, 32.5 - 34.5 minutes; MW of 250 g/mol, 26.0 - 31.0 minutes; MW of 252 g/mol, 24.5 - 31.0 minutes; MW of 254 g/mol, 16.5 - 25.0 minutes; MW of 256 g/mol, 16.5 - 25.0 minutes; MW of 260 g/mol, 11.0 - 16.0 minutes; and MW of 262 g/mol, 11.0 - 16.0 minutes. For components with overlapping retention time ranges, the mass spectrum of each peak is used to identify the MW of the component. Components with the same MW (isomers) are clustered and the total amount per isomer is reported.

In embodiments before hydrogenation, the unhydrogenated DCR contains C13 species with a MW of 180 in an amount of 0-5 wt.%, or 0-3 wt.%, or < 5 wt.%, or < 2 wt.%, or < 1 wt.%, or 0 wt.%. After hydrogenation, the hDCR contains C13 species with a MW of 180 in an amount of 0-25 wt.%, or 5-20 wt.%, or 5-15 wt.%, or > 5 wt.%, or > 7 wt.%, or > 10 wt.%.

In embodiments before hydrogenation, the unhydrogenated DCR contains C13 species with a MW of 174 in an amount of 5-25 wt.%, 5-20 wt.%, or 5-15 wt.%, or > 5 wt.%, or > 10 wt.%, or < 20 wt.%. After hydrogenation, the hDCR contains C13 species with a MW of 174 in an amount of 0-5 wt.%, or 0-3 wt.%, or < 5 wt.%, of < 2 wt.%, or 0 wt.%.

The MW of the species in unhydrogenated DCR and hDCR as measured using the analytical methods previously specified (e.g., MS, MS /GC / HPLC, and GC-MS) can be identified by the following retention profile: MW of 174 g/mol, 7.0 - 8.5 minutes; MW of 180 g/mol, 2.5 - 4.0 minutes; MW of 248 g/mol, 32.5 - 34.5 minutes; MW of 250 g/mol, 26.0 - 31.0 minutes; MW of 252 g/mol, 24.5 - 31.0 minutes; MW of 254 g/mol, 16.5 - 25.0 minutes; MW of 256 g/mol, 16.5 - 25.0 minutes; MW of 260 g/mol, 11.0 - 16.0 minutes; and MW of 262 g/mol, 11.0 - 16.0 minutes. For components with overlapping retention time ranges, the mass spectrum of each peak is used to identify the MW of the component. Components with the same MW (isomers) are clustered and the total amount per isomer is reported.

In embodiments, the DCR is characterized as having a lower acid value (carboxylic acid content) than the rosin acid feedstock for making the DCR. In embodiments, the DCR has an acid value of < 50, or < 45, or < 40, or < 35, or < 30, or < 25, or < 20, or < 15, or < 10, or < 7, or < 5, or 0.5-40, or 0.5-30, or 0.5-20, or 1-20, or 1-15, or 1-15, 1-10 mg/KOH, as measured using ASTM D1240-14 (2018) or ASTM D465.

In embodiments, the DCR has a density of 0.9-1.0, or 0.91-0.99, or 0.92-0.98, or 0.93-0.97, or 0.94-0.96, or > 0.9, or < 1.1 g/cm³.

In embodiments, the DCR is characterized as having viscosities comparable to those of petrochemical base oils, due in part to its relatively high molecular weights, for example, a viscosity of 15-60, or 18-55, or 20-50, or 22-48, or 25-45, or 28-42, or 30-40, or > 20, or > 25, or > 28, or < 45, or < 50 cSt according to ASTM D-445, measured at 40°C.

In embodiments, the DCR has an aniline point of 3-40°C, or 5-40°C, or 5-30°C, or 5-25°C, or 2-20°C, or 5-20°C, or 5-15°C, or < 25°C, or < 20°C, or >3°C , or > 5°C, or > 8°C, according to ASTM D611.

In embodiments, the DCR has a pour point of -40 to +10°C, or -35 to +8°C, - 30 to +5°C, or -30 to +0°C, or -30 to -5°C, or -28 to 0°C or -28 to -5°C, or -28 to -10°C, or > -30°C, or > -28°C, or < +5°C, according to ASTM D97.

In embodiments, the DCR has a flash point of 135-175°C, or 135-165°C, or 135-160°C, or 140-175°C, or 140-160°C, or 140-158°C, or 140-155°C, or >135°C, or > 140°C, or < 175°C, or < 165°C, or < 160°C, according to ASTM D92.

In embodiments, the DCR has a boiling point of 200 - 390°C, or 210 - 390°C, or 235 - 390°C, or 280 - 380°C, or 290 - 370°C, 300 - 360°C, or > 290°C, or > 230°C, > 210°C, or < 400°C, or < 370°C, measured according to D2887.

In embodiments, the DCR has a Gardner Color of 0 - 12.0, or 0.5 - 12.0, or 0.8 - 12.0, or 0.9 - 11, or 1.0 - 10.0, or 1.0 - 6.0, or 1.0 - 5, or > 0, or > 1.0, or > 1.2, or < 10.0, or < 7.0, or < 6.0, or <5.0, or < 2.4, or < 3.0, according to ASTM D6166.

In embodiments, the DCR has a sulfur content of < 500 ppm (0.05 wt.%), or < 300 ppm (0.03 wt.%), or < 200 ppm (0.02 wt.%), or < 100 ppm (0.01 wt.%), or < 10 ppm (0.001 wt.%), or 20-700 ppm (0.002-0.7 wt.%), 30-500 ppm (0.003-0.5 wt.%), or 40-400 ppm (0.004-0.4 wt.%), or 40-300 ppm (0.004-0.3 wt.%), or 40-200 ppm (0.004-0.2 wt.%), based on the total weight of the DCR, measured according to ASTM D5453.

In embodiments, the DCR has a VOC of < 5, or < 4.75, or < 4.5, or < 4.25, or < 4.0, or < 3.75, or < 3.5, or < 3.25, or < 3.0, or < 2.75, or < 2.5, or < 2.25, or < 2.0, or < 1.5, or < 1.0, or < 0.5 wt.%, based on the total weight of the DCR. The VOC of the DCR is measured according to methods: i) summing the percentage by weight contribution from all VOCs present in the product at 0.01% or more, or ii) according to the EPA (Environmental Protection Agency) method 24 or equivalent.

In embodiments, the DCR has a Kb (Kauri butanol) value of 25 - 90, or 30 - 85, or 35 - 80, or 40 - 75, or 45 - 70, or 50 - 65, or > 40, or > 50, or > 60, or > 70, or > 80, according to ASTM D1133.

In embodiments, the DCR has a viscosity index of < -100, or < -110, or < - 115, or < -120, measured according to ASTM D2270. The viscosity index is an arbitrary, unit-less measure of a fluid's change in viscosity relative to temperature change, for example, index of viscosity at 40 °C and viscosity at 100 °C.

In embodiments, the DCR has a δD value of 14 - 18, or 14.2 - 17.8, or 14.5-17.5, or 15 - 17, or 15.2 - 16.5; a δP value of 3 - 6, or 3.2 - 5.5, or 3.4 - 5.2, or 3.5 - 5.0; and δH value of 7 - 10, or 7.5 - 9.5, or 8 - 9, or 8.2 - 8.8 MPa^{1/2}.

In embodiments, the DCR has a surface tension of 25 - 50, or 28 - 45, or 30-40 dynes/cm, according to ASTM D1331.

In embodiments, the hDCR has an oxygen content of < 0.5%, or < 0.4%, or < 0.3%, or < 0.2%, or < 0.1%, or 0 - 0.5%, or 0 - 0.3%, or 0 - 0.1%. The oxygen content can be calculated as the oxygen to carbon ratio, or the sum of oxygen atoms present divided by sum of carbon atoms present in the hDCR component. The number of oxygen and carbon atoms can be obtained from elemental analyses.

In embodiments, the hDCR has an acid value of < 10, or < 8, or < 5, or < 2, or < 1, or < 0.8, or < 0.5, or < 0.2, or 0.01 - 10, or 0.1 - 5, or 0.01 - 2 mg KOH/g, measured according to ASTM D1240 or ASTM D465.

In embodiments, the hDCR has a viscosity at 40°C of 5 - 50, or 10 - 45, or 15 - 40, or 10 - 30 cSt, measured according to ASTM D-445.

In embodiments, the hDCR has an aniline point of 3 - 80°C, or 5 - 70°C, or 5 - 60°C, or 5 - 50°C, or < 80°C, or < 70°C, or < 60°C, measured according to ASTM D611.

In embodiments, the hDCR composition has a pour point of -40 to -10°C, or -35 to -20°C, or -35 to -25°C, measured according to ASTM D97.

In embodiments, the hDCR has a flash point of 95 - 140°C, or 100 - 135°C, or 95 - 135°C, or > 95°C, or > 100°C, or < 140°C measured according to ASTM D92.

In embodiments, the hDCR has a Gardner Color of < 1, or < 0.8, or < 0.5, or < 0.2, or 0 - 0.5, or 0.1 - 1, or 0.15 - 0.8, or 0.1 - 0.5, measured according to ASTM D6166.

In embodiments, the hDCR has a sulfur content of < 10 ppm, or < 8 ppm, or < 5 ppm, or > 0.001 ppm, measured according to ASTM D5453.

In embodiments, the hDCR has a T onset of > 168°C, or > 170°C, or > 175°C, or > 180°C, or > 185°C, or > 190°C, or > 192°C, or < 200°C, or < 210°C, or 168 - 210°C.

In embodiments, the hDCR has a T max of > 183°C, or > 185°C, or > 190°C, or > 195°C, or > 200°C, or > 205°C, or > 210°C, or < 220°C, or 183 - 220°C.

(Second Solvent or Co-solvent): In embodiments, the co-solvent is selected from aromatic / aliphatic hydrocarbons, esters, alcohols, ketones, biobased-solvents such as limonene, d-limonene, l-limonene, terpenes, ethyl lactate, methyl soyate, ethyl soyate, glycerol, ethylene glycols, and mixtures thereof.

In embodiments, the co-solvent is selected from (hydrocarbon) solvents having an evaporation rate of >1 m/s and is capable of solubilizing the base polymer for a solubility rate of > 70%. The high evaporation rate of the co-solvent causes the DCR/co-solvent mixture to evaporate at a higher rate than the DCR solvent used alone. The high evaporation rate ensures the enhanced evaporation rate of the polymer compositions.

In embodiments, the co-solvent is organic (hydrocarbon) solvent selected from the group of isoprene, hexane, heptane, styrene liquid, xylene, siloxanes, dimethylsilicone oil, trimethylsiloxysilicate, tetrahydrofuran (THF), dioxane, toluene, PCBTF (para-chlorobenztriflouride, methylcyclohexane, cyclohexane, 2,2-dichloropropane, methylene chloride, propylene carbonate, acetone, diisobutyl ketone, diisopropylketone, methyl isobutyl ketone, methyl isopropyl ketone, methyl cyclohexanone, cyclohexanone, butanal, pentaldehyde, hexaldehyde, heptaldehyde, octanal, nonanal, and decaldehyde. isobutyl acetate, isopropyl acetate, butyl acetate, propyl acetate, ethyl acetate, diethyl ether, dimethyl ether, diethylene glycol, 2-ethythexanol, amides, mineral spirits, naphtha, glycol ether and mixtures thereof.

In embodiments, the co-solvent is a solvent (e.g., MEK) that partially dissolves the base polymer, the solvent system contains a sufficient amount of DCR for an effective solvent system to dissolve the base polymer. In other embodiments depending on the polymer and the co-solvent (e.g., toluene), a different amount of DCR is present to adjust the Hildebrand solubility parameter to be ±1.0 (cal/cm³)^{1/2} of the polymer's Hildebrand solubility parameter value.

(Additional Components): The base polymer in the solvent system containing DCR as a first solvent can be used in many applications, including but not limited to coatings, adhesives, inks & printing, electronics, membranes, filtrations, composite materials, cosmetics, etc. The additional components depend on the end-use application, being present in an amount of 5 to 80 wt. %, or 10 to 65 wt.%, or 12 to 60 wt.%, or 20 to 50 wt.%, or > 5 wt. %, or < 75 wt. % by the total weight of the polymer composition.

In embodiments for adhesives / sealant applications, the composition further comprises at least tackifiers, which can be hydrogenated or partially hydrogenated. Examples of tackifiers include, e.g., aliphatic and cycloaliphatic C5/C9 hydrocarbon resins, mixed aromatic and aliphatic modified hydrocarbon resins, aromatic modified aliphatic hydrocarbon resins, and aromatic modified aliphatic hydrocarbon resins (partially) hydrogenated version, partially or fully hydrogenated C9 hydrocarbon resins, terpenes, modified terpenes, polyterpenes, hydrogenated terpenes version and combinations thereof, modified rosin esters and copolymers and terpolymers of natural terpenes (e.g., styrene-terpene, alpha-methyl styrene-terpene, and vinyl toluene-terpene), phenolic-modified terpene resins and combinations thereof.

In embodiments for electronic applications, e.g., prepregs, the additional components can be any of reinforcement materials (e.g., glass fibers), dieletric modifiers such as polyphenylene ether, etc.

(Optional Additives): In embodiments, the composition optionally includes additional components including, e.g., antioxidants, adhesion promoters, crosslinking agents, ultraviolet light stabilizers, rheology modifiers, biocides, corrosion inhibitors, dehydrators, colorants (e.g., pigments and dyes), fillers, surfactants, flame retardants, and combinations thereof.

In embodiments, antioxidants are selected from but not limited to, e.g., pentaerythritol tetrakis[3,(3,5-di-tert-butyl-4-hydroxyphenyl)propionate], 2,2'-methylene bis(4-methyl-6-tert-butylphenol), phosphites including, e.g., tris- -nonylphenyl)-phosphite (TNPP) and bis(2,4-di-tert-butylphenyl)4,4'-diphenylene-diphosphonite, di-stearyl-3,3'-thiodipropionate (DSTDP), Butylated hydroxytoluene (BHT), butylated hydroxyanisole (BHA), tertiary-butylhydroquinone (TBHQ) and combinations thereof.

In embodiments, additives are present in an amount of 0.1 - 35, or 0.5 - 30, or 0.8 - 25, or 1 - 20, or 2- 10, or > 0.1, or < 35 wt.%, based on the total weight of the polymer composition.

(Method of Forming a Polymer Composition): The composition is first prepared by dissolving the base polymer in the solvent system in the desired ratios until full solubility is obtained. When the base polymer comprises a blend of two or more polymers, it is preferred for the polymers to be mixed in an extruder prior to being dissolved in the solvent system. In embodiments, blends of two or more base polymers can be dissolved in the solvent system without being extruder blended.

In embodiments, depending upon the end use applications, e.g., hot melt adhesive, coating, etc., the solvent blend is incorporated into the formulation at an elevated temperature e.g., 150-250°C, after other components are mixed.

In embodiments, the polymer composition is used as a sealant, containing (prior to evaporation of the solvents): 5-87 wt. % of at least a polymer selected from the group consisting of: polyurethane (TPU), acrylic polymers, epoxy resins, polyamides, polyesters, polyethylene, SBCs, polypropylene, rubbery polymer, polyisobutylene, poly(vinyl acetate), poly(vinyl alcohol), and mixtures thereof, 3-30 wt. % of a solvent other than DCR, 5-35 wt. % of DCR, 12-60 wt.% of a tackifier, and 0.1-35 wt.% of at least an additive.

(Properties of the Polymer Composition): In embodiments, the polymer composition is characterized as having excellent solubility in the solvent system even at room temperature, and even at a high ratio of polymer to solvent system.

The polymer composition remains fully soluble (> 90% by weight) in solvent systems at polymer-to-solvent ratios ranging from 1:10 to 1:5, or 1:5 to 1:2, or 1:2 to 3:1, or 3:1 to 5:1, measured according to Gravimetric Analysis.

The polymer composition once dissolved or becomes homogeneous has >95%, or >96%, or > 97%, or > 98%, or > 99% transmittance at 600 nm using UV-Vis spectrophotometry.

In embodiments, at least 90 wt.%, or at least 95 wt. %, or at least 99 wt. % of the polymer composition is dissolved in solvent system within 5-30 minutes at room temperature (20-25°C), and > 99% in > 60, or > 90, or > 100, or >120, or > 150 or <300 minutes at a temperature of >40, or >50, or >60 or < 70 °C.

The polymer composition (in solvent system) maintains stability and prevents phase separation for at least: 24 hours, 48 hours, 7 days, 14 days, 1 month, or 3 months at room temperature (20-25°C).

(Applications): The composition with the polymer being soluble in a solvent system is suitable for applications in hot melt adhesives, tapes, labels, and medical products. The composition is also suitable for automotive components such as gaskets, seals, insulations, etc. Gaskets and products formed from the composition are applicable to gaskets for electronics such as drum washing machines, dishwashers, driers and vacuum / steam cleaners, motor vehicle parts, medical supplies, household appliances, office supplies, leisure supplies, etc. It can be further used in applications including disposable nonwoven hygienic articles, paper converting, flexible packaging, woodworking, carton, case sealing, and other assembly applications. The composition is also useful in a variety of processes used to bond a first substrate to a second substrate in lamination processes, e.g., laminating porous substrates to polymer films, porous substrates to porous substrates, polymer films to polymer films, and combinations thereof.

The composition is also suitable in the manufacture of a variety of construction materials, notably in the field of plywood and laminated construction materials as adhesives and sealants, including sprayable adhesives.

(Examples): The following illustrative Examples are intended to be non-limiting.

The following test methods are used.

Melt flow rates (MFR) are measured according to D1238.

The components used in the Examples include:

Tackifier-1 is a partially hydrogenated C₅ / C₉ hydrocarbon resin (mixed aliphatic/aromatic resins) with glass transition temperature of 49 °C and softening point of 100 °C, and a molten Gardner color of < 1, a melt viscosity of 200 cP (ASTM D3236).

Tackifier-2 is an aromatic hydrocarbon resin with glass transition temperature of 90 °C and softening point of 140 °C.

Antioxidant - a sterically hindered phenolic primary antioxidant having Mw of 1178 g/mol, density at 20° C of 1.15 g/ml, MP of 110-125° C.

S-E/B-S is a linear triblock copolymer based on styrene and ethylene / butylene, with a polystyrene content of 31%, a melt index at 230 °C (2.16kg) is 28 g/10 min., a styrene / rubber ratio of 31/69, having a molecular weight (M_{W}) of 40-100 kg/mol.

S-EP is a diblock copolymer based on styrene and ethylene-propylene, a melt index at 230 °C (5 kg) is < 1 g/10 min., a styrene / rubber ratio of 37/63, elongation at break of 100% (ASTM D-412), having a molecular weight (M_{W}) of 100-200 kg/mol.

SEBSS - Hydrogenated styrenic block copolymer (coupled) having a general formula (S-E/B/S)ₙX, with vinyl aromatic content of 42 wt. %, shore hardness A of 65, and peak molecular weight (Mp) of 140 kg/mol, residual unsaturation of 0.1 meq/g , S block Mp of 10.6 kg/mol, E/B/S block Mp of 118.8 kg/mol (after coupling), and E to B mole ratio of 62:38.

SBR- Styrene butadiene rubber (SBR) with molecular weight (Mw)= 500 kg/mol, with styrene content of 15 wt.%, vinyl content of 26 wt.%, and money viscosity of 70MU 100°C.

SBR- styrene butadiene rubber (SBR) with molecular weight (Mw)= 500 kg/mol, styrene content of 21 wt.%, vinyl content of 49 wt.%, and money viscosity of 65 MU 100°C.

Polyisobutylene (PIB) with molecular weight (Mw)=2400g/mol, density= 900kg/m³.

PP- a propylene-based elastomer (PP), having a molecular weight (Mw) ranging from 50,000 to 300,000 g/mole; MFR of 20 g/10 min (230°C/2.16 kg); density 0.862 g/cm³.

EVA- a random ethylene-vinyl acetate (EVA) copolymer having a Melt Index (190°C/2.16kg) of 150 g/10min, melting point =69° C, density 0.95 g/cm³.

EVA- a random ethylene-vinyl acetate (EVA') copolymer having a Melt Index (190°C/2.16kg) of 400 g/10min, melting point =63° C, density 0.96 g/cm³.

SAN-Styrene acrylonitrile (SAN) resin having a melt flow index, MFI of 9 g/10min (ASTM D 1238), an average molecular weight of approximately 165 kg/mol.

ABS-Acrylonitrile Butadiene Styrene (ABS) polymer having a mel flow rate of 7 g/10 min (ISO1133), a density of 1.05 g/ cm³, tensile strength @yield of 50 MPa (ISO527).

PA- Polyamide (PA) resin based on dimer acid.

SBC- Styrenic block copolymer (SBC), linear triblock, molecular weight Mw= 125 kg/mol, styrene content 29.5 %, vinyl content 9 % and MFR= 8 g/10 min at 200°C, 5kg.

Examples: The polymer compositions are prepared based on the components in Table 1, with the components being mixed together for Examples-Poly 1-12. In embodiments the Examples 1-12 are prepared by the steps as (i) Mixing: Specific amounts (g) of polymers 1-12, and a solvent mixture, as specified in Table 1, were combined in a DCR to co-solvent ratio ranging from 1:3 to 3:1 or 1:1. (ii) Initial Mixing: The resulting mixture was kept at 70°C for 165 minutes, producing a swollen polymer (insoluble) with some free solvent present. The mixture was then left at ambient temperature overnight. (iii) additional solvent & Stirring: An additional solvent (10 wt.%) was added, and the mixture was again at 70°C for 300 minutes. Upon cooling to ambient temperature, the reaction mixture became homogeneous (> 90 wt. % solubility).

**Table 1 (1^{st} solvent is MEK except for PA. the 1^{st} solvent for PA is butanol)**

| Examples | Polymer amount crumbs/powder (g) | DCR amount (g) | Solution Phase Formation | 1^{st} Solvent + DCR (g) | Solvent Ratio 1^{st} Solvent/DCR | Solution Phase Formation |
|---|---|---|---|---|---|---|
| SEBS | 0.2995 | 0.709 | homogeneous | 1.7235 | 3:1 | homogeneous |
| SEP | 0.3372 | 0.6922 | polymer swollen | 1.6788 | 3:1 | polymer swollen |
| SEBSS | 0.2951 | 0.752 | homogeneous | 1.7053 | 3:1 | homogeneous |
| SBR | 0.3132 | 0.723 | polymer swollen | 1.722 | 3:1 | polymer swollen |
| SBR' | 0.3036 | 0.6835 | polymer swollen | 1.7216 | 3:1 | polymer swollen |
| PIB | 0.3152 | 0.7293 | homogeneous | 1.6982 | 1:1 | homogeneous |
| PP | 0.3114 | 0.6874 | polymer swollen | 1.6874 | 3:1 | polymer swollen |
| EVA | 0.3012 | 0.7084 | polymer swollen | 1.6779 | 1:1 | homogeneous |
| EVA' | 0.3143 | 0.7319 | homogeneous | 1.69 | 1:1 | homogeneous |
| SAN | 0.3063 | 0.3285 | polymer deforms | 0.8362 | 1:1 | homogeneous |
| ABS | 0.3034 | 0.3034 | polymer deforms | 0.8138 | 1:1 | homogeneous |
| PA | 0.2830 | 0.314 | Polymer swollen | 1.654 | 1:1 | homogeneous |

In order to achieve a homogeneous solution, first tackifier-1 and / or tackifier-2 added and then DCR added to the solution mixture with further stirring. The resultant solution phase observed as presented in table 2.

**Table 2**

| Exam | Polymer amount (g) | Tackifier | Tackifier amount (g) | Solution Phase Formation | Solvent | Solvent amount (g) | Solution Phase Formation |
|---|---|---|---|---|---|---|---|
| SEBS | 0.2995 | Tackifier 1 | 0.312 | polymer swollen | DCR | 1.7235 | homogeneous |
| SEBSS | 0.2951 | Tackifier 1 | 0.313 | polymer swollen | DCR | 1.7053 | homogeneous |
| PP | 0.3114 | Tackifier 1 | 0.296 | homogeneous | DCR | 1.6874 | polymer deforms |
| SAN | 0.3063 | Tackifier 2 | 0.287 | insoluble | DCR | 0.8384 | insoluble |
| ABS | 0.3034 | Tackifier 2 | 0.299 | polymer deforms | DCR | 0.8138 | homogeneous |

Table 3 presents experimental results where solvent mixture is hydrogenated DCR (hDCR), and polymer either in crumbs or powder form. The hDCR-to-MEK (co-solvent) ratio ranging from 1:3 to 3:1 or 1:1

**Table 3**

| Examples | Polymer amount (g) | Solvent amount (g) | Solvent Ratio (hDCR/MEK) | Solution Phase Formation |
|---|---|---|---|---|
| SEBS 1 | 0.296 | 0.989 | 3 to 1 | homogeneous |
| SEBS 2 | 0.274 | 1.0 | 1 to 1 | polymer swollen |
| SEBS 3 | 0.264 | 0.99 | 1 to 3 | polymer swollen |
| SEP 1 | 0.268 | 1.01 | 3 to 1 | polymer swollen |
| SEP 2 | 0.288 | 1.016 | 1 to 1 | polymer swollen |
| SEP 3 | 0.272 | 0.909 | 1 to 3 | polymer swollen |
| SEBSS 1 | 0.26 | 0.658 | 3 to 1 | homogeneous |
| SEBSS 2 | 0.269 | 0.688 | 1 to 1 | homogeneous |
| SEBSS 3 | 0.277 | 0.710 | 1 to 3 | homogeneous |
| SBR 1 | 0.282 | 0.372 | 3 to 1 | homogeneous |
| SBR 2 | 0.307 | 0.33 | 1 to 1 | homogeneous |
| SBR 3 | 0.279 | 0.319 | 1 to 3 | homogeneous |
| PIB 1 | 0.264 | 0.343 | 3 to 1 | homogeneous |
| PIB 2 | 0.261 | 0.323 | 1 to 1 | homogeneous |
| PIB 3 | 0.288 | 0.32 | 1 to 3 | homogeneous |
| PP 1 | 0.302 | 1.031 | 3 to 1 | polymer swollen |
| PP 2 | 0.269 | 1.023 | 1 to 1 | insoluble |
| PP 3 | 0.265 | 1 | 1 to 3 | insoluble |
| EVA 1 | 0.284 | 0.355 | 3 to 1 | homogeneous |
| EVA 2 | 0.286 | 0.348 | 1 to 1 | homogeneous |
| EVA 3 | 0.291 | 0.331 | 1 to 3 | homogeneous |
| EVA' 1 | 0.289 | 0.335 | 3 to 1 | homogeneous |
| EVA' 2 | 0.286 | 0.318 | 1 to 1 | homogeneous |
| EVA' 3 | 0.269 | 0.316 | 1 to 3 | homogeneous |
| SBC 1 | 0.296 | 0.325 | 3 to 1 | homogeneous |
| SBC 2 | 0.291 | 0.333 | 1 to 1 | homogeneous |
| SBC 3 | 0.287 | 0.344 | 1 to 3 | homogeneous |

Table 4 presents experimental results where solvent mixture is hDCR/toluene (co-solvent) in a ratio ranging from 1:3 to 3:1 or 1:1.

**Table 5**

| Examples | Polymer amount (g) | Solvent amount (g) | Solvent (hDCR/toluene) | Solution Phase Formation |
|---|---|---|---|---|
| SEBS 1 | 0.291 | 0.644 | 3 to 1 | homogeneous |
| SEBS 2 | 0.277 | 0.632 | 1 to 1 | homogeneous |
| SEBS 3 | 0.282 | 0.633 | 1 to 3 | homogeneous |
| SEP 1 | 0.296 | 1.17 | 3 to 1 | homogeneous |
| SEP 2 | 0.297 | 1.243 | 1 to 1 | homogeneous |
| SEP 3 | 0.277 | 1.179 | 1 to 3 | homogeneous |
| SEBSS 1 | 0.304 | 0.645 | 3 to 1 | homogeneous |
| SEBSS 2 | 0.275 | 0.630 | 1 to 1 | homogeneous |
| SEBSS 3 | 0.282 | 0.670 | 1 to 3 | homogeneous |
| SBR 1 | 0.285 | 1.124 | 3 to 1 | homogeneous |
| SBR 2 | 0.281 | 1.185 | 1 to 1 | homogeneous |
| SBR 3 | 0.296 | 1.15 | 1 to 3 | homogeneous |
| PIB 1 | 0.31 | 0.636 | 3 to 1 | homogeneous |
| PIB 2 | 0.298 | 0.316 | 1 to 1 | homogeneous |
| PIB 3 | 0.29 | 0.319 | 1 to 3 | homogeneous |
| PP 1 | 0.294 | 0.331 | 3 to 1 | homogeneous |
| PP 2 | 0.3 | 0.36 | 1 to 1 | homogeneous |
| PP 3 | 0.253 | 0.324 | 1 to 3 | homogeneous |
| EVA 1 | 0.27 | 1.168 | 3 to 1 | polymer swollen |
| EVA 2 | 0.217 | 1.182 | 1 to 1 | polymer swollen |
| EVA 3 | 0.279 | 1.199 | 1 to 3 | polymer swollen |
| EVA' 1 | 0.295 | 0.655 | 3 to 1 | polymer deforms |
| EVA' 2 | 0.285 | 0.677 | 1 to 1 | homogeneous |
| EVA' 3 | 0.298 | 0.645 | 1 to 3 | homogeneous |
| SBC 1 | 0.285 | 0.729 | 3 to 1 | homogeneous |
| SBC 2 | 0.272 | 0.694 | 1 to 1 | homogeneous |
| SBC 3 | 0.293 | 0.364 | 1 to 3 | homogeneous |
| SEBS 1 | 0.281 | 0.661 | 3 to 1 | homogeneous |
| SEBS 2 | 0.278 | 0.658 | 1 to 1 | homogeneous |
| SEBS 3 | 0.288 | 0.678 | 1 to 3 | homogeneous |

As used herein, the term "comprising" means including elements or steps that are identified following that term, but any such elements or steps are not exhaustive, and an embodiment can include other elements or steps. "Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

## Claims

1. A polymer composition comprising:
(a) a base polymer selected from the group consisting of: acrylic polymers, epoxy resins, polyamide, polyesters, polypropylene, styrenic block copolymer (SBC), polybutadiene, styrene-butadiene rubber, polyisobutylene, poly(vinyl acetate), and mixtures thereof;
(b) a solvent system containing:
(i) a decarboxylated rosin (DCR) as a first solvent, the DCR has:
one or more C=C groups and 40 to 100 wt.% of tricyclic compounds having 18 to 20 carbon atoms;
wherein:
a sum of the tricyclic compounds as aromatic and cycloaliphatic in the DCR is > 50 wt.%, based on total weight of the DCR; and
an amount of tricyclic cycloaliphatic compound in the DCR is > 15 wt.%, based on total weight of the DCR; and
(ii) a co-solvent selected from aromatic hydrocarbons, aliphatic hydrocarbons, esters, alcohols, ketones, and mixtures thereof,
at a weight ratio of DCR to co-solvent of 20:80 to 80:20; and
wherein at least 90 wt.% of the base polymer is dissolved in the solvent system.

2. The polymer composition of claim 1, wherein the co-solvent has a Hildebrand solubility of at least 1.0 (cal/cm³)^{1/2}) more than or at least 1.0 (cal/cm³)^{1/2}) less than the Hildebrand solubility of the base polymer.

3. The polymer composition of claim 1, wherein at least 95 wt. % of the base polymer is dissolved in the solvent system.

4. The polymer composition of any of claims 1-2, wherein the SBC is selected from: unhydrogenated SBC, hydrogenated SBC, partially hydrogenated SBC, selectively hydrogenated SBC, and mixtures thereof.

5. The polymer composition of claim 4, wherein the hydrogenated styrenic block copolymer has a general configuration selected from: S-EB-S, S-E/P, S-E/B, S-EP-S, and mixtures thereof;
wherein:
each S block is derived from a vinyl aromatic monomer;
each EB block is an ethylene-butylene block; and
each EP block is an ethylene-propylene block.

6. The polymer composition any of claims 1-5, wherein the SBC has:
a molecular weight (Mₚ) of 8 - 445 kg/mol;
a polystyrene content (PSC) of 8 - 45; and
a vinyl content of 25-80 wt. % based on the total weight of the SBC measured via 1HNMR.

7. The polymer composition of any of claims 1-6, wherein the solvent system has a DCR to co-solvent weight ratio of 75:25 to 25:75.

8. The polymer composition of any of claims 1-7, wherein the decarboxylated rosin (DCR) is an unhydrogenated decarboxylated rosin having at least one of:
a C19 species with a MW of 262 in an amount of 5-20 wt.%;
a C19 species with a MW of 260 in an amount of 5-25 wt.%;
a C19 species with a MW of 256 in an amount of 35-55 wt.%;
a C19 species with a MW of 252 in an amount of 5-20 wt.%;
a C13 species with a MW of 180 in an amount of 0-5 wt.%; and
a C13 species with a MW of 174 in an amount of 5-25 wt.%.

9. The polymer composition any of claims 1-7, wherein the decarboxylated rosin (DCR) is a hydrogenated decarboxylated rosin (hDCR) having at least one of:
a C19 species with a MW of 262 in an amount of 25-100 wt.%;
a C19 species with a MW of 260 in an amount of 0-5 wt.%;
a C19 species with a MW of 256 in an amount of 0-40 wt.%;
a C19 species with a MW of 252 in an amount of 0-5 wt.%;
a C13 species with a MW of 180 in an amount of 0-20 wt.%;
a C13 species with a MW of 174 in an amount of 0-5 wt.%; and
an oxygen content of < 0.5%.

10. The polymer composition of any of claims 1-9, wherein the DCR has:
a density of 0.9 to 1.0 g/cm³ at 20°C;
an acid value of < 50 mg KOH/g, according to ASTM D1240-14;
an aniline point of 3 - 40°C, according to ASTM D611;
a pour point of -40 to +10°C, according to ASTM D97;
a flash point of 95 - 175°C, according to ASTM D92;
a boiling point of 200 - 390°C, according to D2887;
a Gardner Color of 0 - 12.0, according to ASTM D6166;
a sulfur content of < 500 ppm, according to ASTM D5453;
a Kb (Kauri butanol) value of 25 - 90, according to ASTM D1133;
a viscosity index of > -200, according to ASTM D2270; and
a viscosity of 15 - 60 cSt, according to ASTM D-445 at 40°C.

11. The polymer composition of any of claims 1-2, wherein the co-solvent is aromatic hydrocarbon or aliphatic hydrocarbon selected from the group of isoprene, hexane, heptane, styrene liquid, xylene, siloxanes, toluene, PCBTF (para-chlorobenztriflouride), methylcyclohexane, cyclohexane, 2,2-dichloropropane, methylene chloride, and mixtures thereof.

12. The polymer composition of any of claims 1-2, wherein the co-solvent is ester selected from the group of isobutyl acetate, isopropyl acetate, butyl acetate, propyl acetate, ethyl acetate, propylene carbonate, and mixtures thereof.

13. The polymer composition of any of claims 1-2, wherein the co-solvent is ketone selected from the group of acetone, diisobutyl ketone, diisopropylketone, methyl isobutyl ketone, methyl isopropyl ketone, methyl cyclohexanone, cyclohexanone, methyl-ethyl ketone (MEK) and mixtures thereof.

14. The polymer composition of any of claims 1-2, wherein the co-solvent is alcohol selected from the group of butanal, pentaldehyde, hexaldehyde, heptaldehyde, octanal, nonanal, and decaldehyde. diethyl ether, dimethyl ether, diethylene glycol, 2-ethythexanol, mineral spirits, naphtha, amides, glycol ether, and mixtures thereof.

15. The polymer composition of any of claims 1-14, wherein the polymer composition is characterized as having a transparency of >95% transmittance at 600 nm measured in accordance with ASTM-D1003.
